# DEMANDE DE BREVET EUROPEEN

(11) **EP 1 424 312 A1**
(43) Date de publication de la demande: **02.06.2004**
(21) Numéro de dépôt: 02447209.4
(22) Date de dépôt: 06.11.2002
(51) Int. Cl.: C02F 1/50, C02F 1/28, C02F 5/00, C02F 9/00

(54) **Dispositif et procédé de traitement de l'eau**

(71) Demandeur: Pierard, Gérard, 5000 Namur (BE)
(72) Inventeur: Pierard, Gérard, 5000 Namur (BE)
(74) Mandataire: Van Malderen, Michel

(57) **Abrégé**

La présente invention se rapporte à un dispositif de traitement d'eau rassemblé au sein d'une sphère (1) comprenant deux demi-sphères (14,15) munies d'une entrée (2) et d'une sortie (6) assemblées par un cerclage (12) qui comprend au moins un compartiment (8) comprenant de la pouzzolane (5) et au moins un compartiment (10) comprenant du charbon actif imbibé d'argent (9), des tamis (13) de part et d'autre desdits compartiments, ainsi q'un dôme de séparation eau/gaz en forme de champignon (4) et un purgeur automatique (3) placé au-dessus dudit dôme.

## Description

### Objet de l'invention

La présente invention se rapporte à un dispositif et un procédé de purification, de détartrage et de désodorisation de l'eau.

### Arrière-plan technologique et état de la technique

De très nombreux systèmes de purification d'eau sont actuellement sur le marché. Ceux-ci fonctionnent généralement selon des principes de filtration par un moyen physique quelconque suivi d'un traitement contre les algues, les bactéries et éventuellement contre le calcaire. Parmi les méthodes de traitement utilisées, on peut citer l'utilisation de réactifs de coagulation-floculation et oxydants (chlore, fluor) suivi d'un microtamisage pratiqué en amont de la potabilisation.

Depuis quelques années, et afin de pouvoir réduire l'utilisation de produits oxydants, on s'intéresse à des solutions de prétraitement selon un concept de biofiltration en amont de la filière de potabilisation.

Dans une étude commandée par l'agence de l'eau Seine-Normandie, réf documentation B18775, on divulgue un réacteur de biofiltration en flux ascendant équipé de pouzzolane permettant d'éliminer les algues en présence d'acide phosphorique.

Par ailleurs, l'utilisation de charbon actif est bien connue dans la purification de l'air et de l'eau. Ce type de filtre est aujourd'hui largement utilisé dans l'industrie.

On connaît également l'effet bactéricide de l'argent depuis l'antiquité par l'intermédiaire d'eau conservée dans des récipients en argent. Il existe actuellement des charbons actifs imbibés d'argent qui combinent donc les deux effets. La microsolubilité de l'argent produit des ions qui se fixent sur la paroi cellulaire extérieure de la bactérie, ce qui bloque son mécanisme respiratoire. Le temps de séjour est cependant très important pour aboutir à ce mécanisme, ce qui limite l'utilisation de ce type de produit à l'eau alimentaire.

D'autres dispositifs tels que les adoucisseurs se destinent essentiellement à enlever les ions de calcium et de magnésium de l'eau. Sous l'effet de la chaleur, le calcium et le magnésium de l'eau alimentaire se transforment en calcaire également appelé tartre qui va se déposer dans les canalisations d'eau. La forme cristallographique de ce dépôt étant essentiellement la calcite. L'autre forme cristallographique, l'aragonite, se présente sous forme d'aiguilles et ne se dépose pas dans les canalisations.

Plus il y a de tartre, plus il faut de temps et d'énergie pour chauffer l'eau. Il en résulte donc des pertes d'énergie considérables ainsi que des disfonctionnements mécaniques dues à ce tartre lorsque l'eau alimentaire contient une forte concentration de calcium et de magnésium.

Pendant longtemps, on a cru que la solution passait par la technique de l'adoucisseur. Cette technique procède à un échange d'ions dans lesquels on remplace des ions calcium et magnésium qui sont utiles pour la santé par des ions de sodium. Cette technique est aujourd'hui largement abandonnée à cause notamment de législations nationales qui interdisent cette pratique. Par ailleurs, l'eau adoucie est souvent beaucoup plus corrosive pour les canalisations, ce qui pose alors d'autres problèmes. L'adoucisseur est également relativement onéreux à l'achat et à l'usage car il nécessite un entretien régulier et au minimum une maintenance annuelle. Un tel dispositif est divulgué dans le brevet NL-A-7 507 881.

D'autres systèmes anti-tartre sont également connus, ceux-ci produisent des champs électriques et magnétiques et sont généralement basés sur le principe de fonctionnement selon lequel on tente de modifier les propriétés électriques et physiques des molécules de carbonate de calcium qui forment le tartre. Un bobinage crée un champ électrique alternatif traversé perpendiculairement par le flux de l'eau alimentaire, ce champ électrique basse tension d'une fréquence bien définie entraîne la formation de cristaux de carbonate de calcium sous forme d'aragonite non incrustante. Le fonctionnement de ce type de système fait cependant l'objet de nombreuses controverses. Un tel dispositif est divulgué dans le document EP-A-0 610 142.

D'autres systèmes font appel à l'électrodialyse inverse dans lequel une eau très dure est rendue alcaline et dans laquelle on induit une précipitation du carbonate de calcium. Pour obtenir cet effet, on fait passer l'eau alcaline à travers une poudre de carbonate de calcium constituée de cristaux inférieurs à 100µ et déposés sur un filtre. Ce procédé est divulgué dans le brevet EP-A-0 503 589. Un tel traitement est cependant inenvisageable pour la plupart des eaux alimentaires et en particulier pour le consommateur individuel se trouvant en bout de chaîne d'un réseau de distribution d'eau potable.

### Buts de l'invention

La présente invention vise à fournir un dispositif, ne présentant pas les inconvénients de l'état de la technique, capable de purifier et de dégazer l'eau tout en empêchant les dépôts de tartre dans les canalisations d'eau alimentaire.

### Résumé de l'invention

La présente invention divulgue un dispositif de traitement d'eau rassemblé au sein d'une sphère comprenant deux demi-sphères munies d'une entrée et d'une sortie assemblées par un cerclage qui comprend au moins un compartiment comprenant de la pouzzolane et au moins un compartiment comprenant du charbon actif imbibé d'argent, des tamis de part et d'autre desdits compartiments, ainsi q'un dôme de séparation eau/gaz en forme de champignon et un purgeur automatique placé au-dessus dudit dôme.

Selon l'invention, le cerclage en Inox assure une étanchéité par l'intermédiaire de joints autoclaves montés sur une bague.

L'invention montre également qu'un dispositif de filtrage, un manomètre et un réducteur de pression sont placés en amont de la sphère de traitement et que celle-ci est isolée du circuit de distribution d'eau par l'intermédiaire de vannes d'isolement et protégée par une soupape de sécurité.

Selon un mode d'exécution préféré de l'invention, la pouzzolane utilisée a une granulométrie comprise entre 4 et 7 mm

L'invention a également pour objet de proposer un procédé de traitement d'eau comprenant un pré-filtrage avant l'entrée dans la sphère de traitement caractérisé en ce que l'eau pré-filtrée entre dans un premier compartiment comprenant de la pouzzolane par une ouverture et ensuite dans un second compartiment comprenant du charbon actif imprégné d'argent avant d'être séparée de sa phase gazeuse par l'intermédiaire d'un dôme en forme de champignon dans lequel l'eau est ralentie lorsqu'elle est refoulée vers le bas de la sphère par un cône allant en s'élargissant, le gaz étant évacué par le purgeur automatique, avant d'être poussée vers la sortie.

L'invention divulgue enfin l'utilisation d'un dispositif selon l'invention pour le traitement algicide, bactéricide et anti-tartre de l'eau alimentaire.

### Brève description des figures

La figure 1 représente une coupe du dispositif faisant l'objet de l'invention avec tous ces éléments constitutifs ainsi qu'un détail d'assemblage des deux demi-sphères.

La figure 2 représente un schéma d'intégration de ce dispositif dans une canalisation d'eau avec une vue en élévation de profil et une vue d'élévation de face.

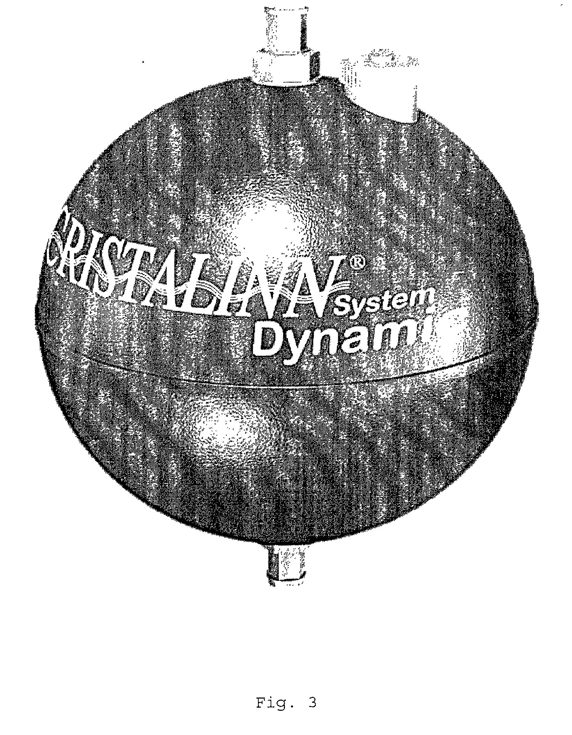

La figure 3 montre l'aspect extérieur du dispositif de la présente invention.

### Description détaillée de l'invention

L'invention consiste à faire passer l'eau à travers au moins deux compartiments successifs pouvant comprendre une série de substances capables de traiter l'eau. Ces traitements pouvant comprendre une filtration, un traitement bactéricide, algicide ou tout autre traitement adapté au problème spécifique de l'eau à traiter.

Un des compartiments (godets) du dispositif de la présente invention contient du charbon actif imprégné à l'argent. Il s'agit là d'un charbon actif recouvert d'une fine pellicule d'argent qui permet d'empêcher la formation de poches de bactéries. Le mécanisme bactéricide a été expliqué plus haut. L'eau est ensuite amenée en dessous d'un dôme en forme de champignon avant d'être refoulée vers le bas dans un cône qui s'élargit vers le bas. De cette façon, la vitesse d'écoulement de l'eau diminue, ce qui permet aux bulles de gaz de remonter, de produire une « décantation » et de donner lieu à un dégazage à travers un purgeur automatique. L'eau purifiée et dégazée est ensuite refoulée vers la sortie. Tous les gaz dissous comme par exemple le CO₂, O₂, N₂, NH₃, Cl₂, F₂ ou tout autre gaz pouvant être présent dans l'eau alimentaire, pouvant soit provenir du traitement bactéricide de l'eau en amont ou des produits de décomposition des bactéries et des algues, et influençant fortement le goût de celle-ci, peuvent être éliminés de cette façon.

Au moins un autre compartiment du dispositif de la présente invention contient de la pouzzolane. La pouzzolane est une roche volcanique très poreuse d'origine basaltique comprenant notamment de la silice, de l'alumine et de l'oxyde de fer en tant que composants majeurs, ainsi que de la chaux, de la magnésie, de l'oxyde de sodium, de potassium et de titane en moindre quantité. D'autres éléments tels que le soufre, le phosphore, le baryum, le chrome, le cobalt, le nickel, le strontium, le rubidium, le vanadium et le zinc sont également présents en forme de traces.

Le caractère algicide de la pouzzolane sur l'eau est connu mais l'effet le plus surprenant de la présente invention est le constat que le passage simultané d'une eau à travers la pouzzolane et le charbon activé imbibé d'argent, change les caractéristiques de cette eau de telle façon que l'on constate non seulement une absence de dépôt de tartre dans les conduites mais également une dissolution de celui-ci dans les conduites entartrées existantes.

Le dispositif de la présente invention permet donc le traitement des eaux de distribution ménagère et industrielle en continu dans le but d'éviter les incrustations de tartre ou de nettoyer les dépôts anciens préalablement fixés. Il permet également d'empêcher la formation de boue dans les circuits fermés.

### Description d'une forme d'exécution préférée de l'invention

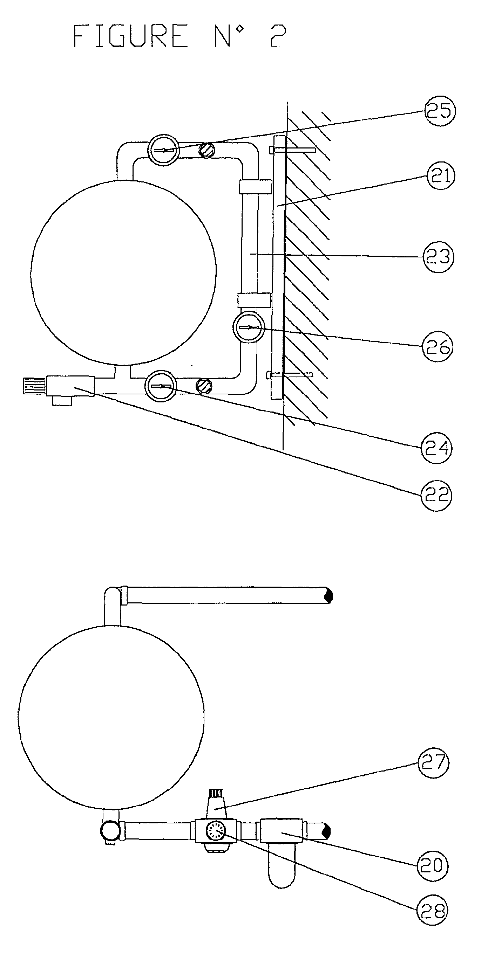

De manière générale, lorsqu'on place le dispositif de l'invention dans une conduite existante tel que représenté dans la figure 2, on fixe un filtre de préfiltration 20 dans la conduite pour éliminer les résidus non solubles en suspension dans l'eau de distribution. La sphère résiste à une pression d'épreuve de 8 bars et est prévue pour une utilisation habituelle à 4 bars. Dans la mesure ou on souhaite protéger la sphère 1 contre des pressions intempestives trop fortes, on place également un manomètre 28 avec un réducteur de pression 27, ainsi qu'une soupape de sécurité réglée à 6 bars. Les vannes d'isolement d'entrée et de sortie 24,25 permettent de déconnecter ou de by passer le dispositif par la vanne 26.

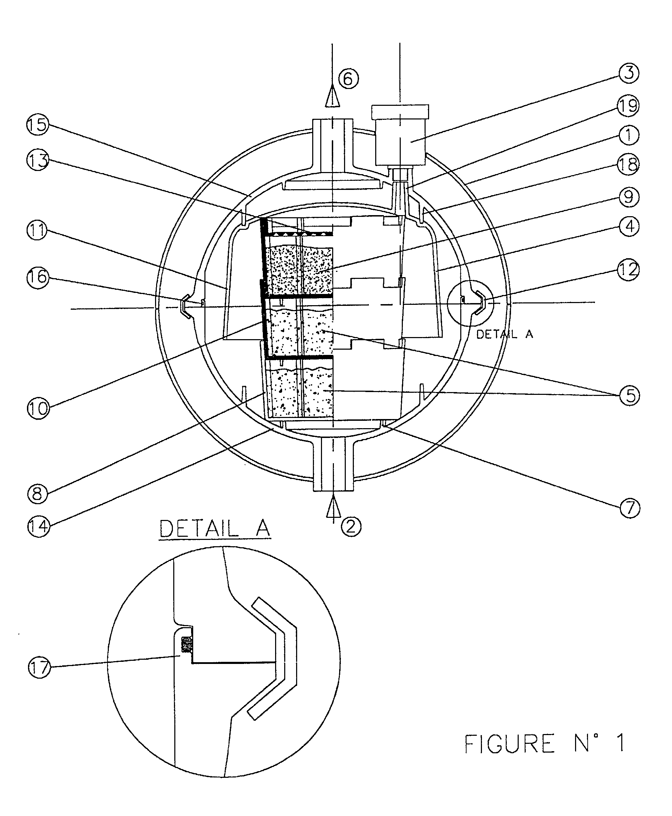

Le dispositif de l'invention est montré en coupe dans la figure 1. Il est formé de deux demi-sphères 14,15, réunies entre elles par un cerclage en Inox 12. L'étanchéité est obtenue par un système de joints autoclaves 16 montés sur une bague 17. Cet élément est représente en détail dans la figure un (détail A).

A l'intérieur du dispositif se trouvent différents compartiments 8,10 et tamis 13, disposés de part et d'autre desdits compartiments 8,10 ainsi qu'un dôme 4 en forme de champignon disposé au-dessus de ces différents compartiments. Chaque compartiment reçoit environ 300gr de masse catalytique d'une granulométrie prédéterminée comme par exemple 4 à 7 mm pour la pouzzolane, capable d'influencer la formation de tartre. Par masse catalytique, il faut entendre tout produit de traitement de l'eau mais dont la pouzzolane 5 et le charbon activ imbibé à l'argent 9 constituent un mode d'exécution préféré.

Ces produits subissent une poussée de bas en haut par le débit de l'eau provenant de l'entrée 2 et sont continuellement en mouvement. Les tamis 13 placés de part et d'autre des compartiments empêchent la perte des masses catalytiques. Une enveloppe sphérique 1 est disposée autour des deux demi-sphères 14,15 et le tout est assemblé par un ensemble de vannes permettant un by-pass et assurant la fixation murale 21 ou sur pied (voir figure 2).

L'objectif des masses catalytiques est notamment de transformer l'eau de manière à obtenir non plus une précipitation de calcite mais essentiellement d'aragonite non incrustante même en phase vapeur lorsque l'eau est surchauffée sous pression.

Par ailleurs le dispositif selon l'invention permet de dégazer l'eau, par l'intermédiaire d'un dôme 4 ayant une forme particulière et partant en s'élargissant vers le bas, formant un cône de refoulement allant en s'élargissant 11. Ceci permet un ralentissement de la vitesse d'écoulement de l'eau et ainsi une séparation de la phase gazeuse de la phase liquide. Le dégazage se fait alors automatiquement via une cheminée de dégazage 19 par un purgeur 3 libérant ainsi l'eau d'odeurs et de goûts indésirables. L'eau qui était entrée par l'ouverture 2 est ensuite, après traitement, refoulée vers la sortie 6.

Les phénomènes susceptibles de conduire à la dissolution ou à la précipitation du carbonate de calcium sont essentiellement déterminés par la concentration d'anhydride carbonique, la température, l'alcalinité et le pH de l'eau. Pour une teneur donnée en hydrogéno-carbonate de calcium et de magnésium, il existe une quantité nécessaire d'anhydride carbonique pour qu'il n'y ait pas décomposition des hydrogéno-carbonates et précipitation des carbonates. Si une eau contient une quantité supérieure à cette quantité nécessaire, cet excès constitue l'anhydride carbonique susceptible de dissoudre les carbonates. Si cette quantité est par contre inférieure, il y a précipitation des carbonates de calcium.

Il est évident que les masses catalytiques peuvent être choisies en fonction des effets sur l'eau que l'on désire obtenir. On peut donc multiplier le nombre de compartiments et l'adapter au traitement désiré.

Dans le mode d'exécution préféré de la présente invention le mécanisme exact de l'influence du passage de l'eau à travers la pouzzolane avec ses nombreux éléments chimiques suivi d'un passage dans le charbon actif imprégné d'argent sur la structure du carbonate de calcium formé est encore mal connue mais on observe des résultats marqués au niveau de l'absence de dépôts de calcaire.

### Légende

- 1.: Sphère de traitement de l'eau
- 2.: Entrée de l'eau dans la sphère
- 3.: Purgeur automatique
- 4.: Dôme de dégazage
- 5.: Pouzzolane
- 6.: Sortie de l'eau après traitement
- 7.: Pieds de fixation des compartiments
- 8.: Compartiment
- 9.: Charbon activé imprégné d'argent
- 10.: Compartiment
- 11: Cône de refoulement allant en s'élargissant
- 12.: Cerclage en Inox
- 13.: Tamis
- 14.: Demi-sphère inférieure
- 15.: Demi-sphère supérieure
- 16.: Joints autoclaves
- 17.: Bague
- 18.: Fixation dôme de dégazage
- 19.: Cheminée de dégazage
- 20.: Filtre en amont du dispositif de l'invention
- 21.: Fixations murales
- 22.: Soupape de sécurité 6 bars
- 23.: Conduites
- 24.: Vannes d'isolement entrée
- 25.: Vanne d'isolement sortie
- 26.: Vanne de by-pass
- 27.: Réducteur de pression
- 28.: Manomètre

## Revendications

1. Dispositif de traitement d'eau rassemblé au sein d'une sphère (1) comprenant deux demi-sphères (14,15) munies d'une entrée (2) et d'une sortie (6) assemblées par un cerclage (12) **caractérisé en ce qu'**il comprend au moins un compartiment (8) comprenant de la pouzzolane (5) et au moins un compartiment (10) comprenant du charbon actif imbibé d'argent (9), des tamis (13) de part et d'autre desdits compartiments, ainsi q'un dôme de séparation eau/gaz en forme de champignon (4) et un purgeur automatique (3) placé au-dessus dudit dôme.

2. Dispositif selon la revendication 1 **caractérisé en ce que** le cerclage (12) assure une étanchéité par l'intermédiaire de joints autoclaves (16) montés sur une bague (17).

3. Dispositif selon la revendication 1 **caractérisé en ce que** un dispositif de filtrage (20), un manomètre (28) et un réducteur de pression (27) sont placés en amont de la sphère de traitement (1) et que celle-ci est isolée du circuit de distribution d'eau par l'intermédiaire de vannes d'isolement (24,25) et protégée par une soupape de sécurité (22).

4. Dispositif selon la revendication 1 **caractérisé en ce que** ladite pouzzolane (5) a une granulométrie comprise entre 4 et 7 mm.

5. Procédé de traitement d'eau comprenant un pré-filtrage avant l'entrée dans la sphère de traitement (1) **caractérisé en ce que** l'eau pré-filtrée entre dans un premier compartiment (8) comprenant de la pouzzolane (5) par une ouverture (2) et ensuite dans un second compartiment (10) comprenant du charbon actif imprégné d'argent (9) avant d'être séparée de sa phase gazeuse par l'intermédiaire d'un dôme en forme de champignon (4) dans lequel l'eau est ralentie lorsqu'elle est refoulée vers le bas de la sphère par un cône allant en s'élargissant (11), le gaz étant évacué par le purgeur automatique (3), avant d'être poussée vers la sortie (6).

6. Utilisation d'un dispositif selon l'invention pour le traitement algicide, bactéricide et anti-tartre de l'eau alimentaire.
